# FASCICULE DE BREVET EUROPEEN

(11) **EP 1 322 127 B1**
(45) Date de publication et mention de la délivrance du brevet: **18.11.2009**
(21) Numéro de dépôt: 02293001.0
(22) Date de dépôt: 05.12.2002
(51) Int. Cl.: H04W 52/02, G06F 1/32

(54) **Optimisation de la consommation d'une puce auxiliaire multimedia dans un terminal de radiocommunication mobile**
Optimierung des Verbrauchs eines Multimediahilfschips in einem mobilen Kommunikationsgerät
Optimisation of the consumption of an auxiliary multimedia chip in a radiocommunications mobile terminal

(30) Priorité: 06.12.2001 FR 0115776
(43) Date de publication de la demande: 25.06.2003
(60) Demande divisionnaire: 09172808.9
(73) Titulaire: IPG Electronics 504 Limited, St Peter Port Guernsey GY1 3QL (GB)
(72) Inventeur: Villaret, Olivier, 78290 Croissy-sur-Seine (FR)
(74) Mandataire: Talbot-Ponsonby, Clare Josephine

(56) Documents cités:
- EP-A- 0 677 974
- WO-A-93/25955
- US-A- 4 545 030
- US-A- 5 058 203
- US-A- 5 142 684
- US-A- 6 040 845

## Description

La présente invention se rapporte à un terminal de radiocommunication où la consommation d'une puce auxiliaire multimédia intégrée au terminal est optimisée de sorte à augmenter l'autonomie du terminal en mode veille.

L'invention se rapporte donc plus particulièrement au domaine des télécommunications et notamment au domaine des terminaux de radiocommunication de type GSM (acronyme pour l'expression anglo-saxonne « Global System Mobil ») susceptibles de mettre en oeuvre des fonctions de type multimédia.

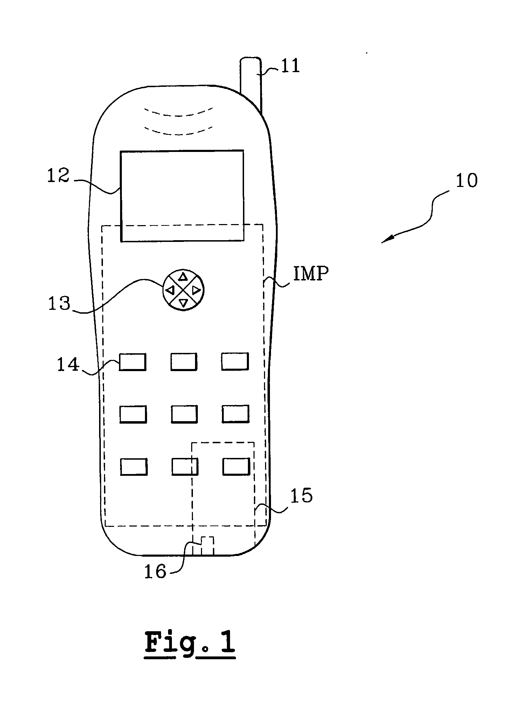

La figure 1 montre un tel terminal de radiocommunication 10, comprenant essentiellement une antenne de réception 11, un écran 12, typiquement un écran à affichage par cristaux liquides, une touche de navigation 13 et un pavé de touches 14. Le terminal 10 comprend en plus une batterie 15 intégrée et une fiche de connexion 16 pour la connexion de la batterie avec un chargeur de batterie. Enfin, le terminal 10 comprend un circuit imprimé IMP pour accueillir l'ensemble des circuits du terminal de radiocommunication parmi lesquels des puces de microprocesseur de différents types.

En effet, dans une architecture classique de terminaux de radiocommunication de type GSM, l'écran de type écran à affichage par cristaux liquides est géré par un microprocesseur réalisé sur une puce appelée la puce GSM, qui permet d'afficher à l'écran les barres de champs, l'état de la batterie etc..., et permet éventuellement de faire tourner des jeux. De plus, pour mettre en oeuvre des fonctions de type multimédia par l'intermédiaire de terminaux de radiocommunication GSM, il existe des composants spécifiques appelés puces auxiliaires multimédia MMCC (pour « Multimedia Companion Chip »). De tels composants sont dotés de très fortes capacités de traitement du signal pour permettre la gestion d'applications multimédia de type audio ou vidéo par exemple.

Le problème technique qui se pose alors concerne la gestion de l'écran à affichage par cristaux liquides lorsqu'une puce auxiliaire multimédia MMCC est intégrée à une architecture classique de terminaux GSM. En effet, on a alors deux microprocesseurs qui doivent cohabiter pour traiter les informations liées à la gestion de l'écran.

Or, les puces auxiliaires nécessitant des performances d'affichage accrues, elles sont directement connectées à un écran et ce sont donc ces composants qui gèrent les accès à l'écran. Ainsi est-il communément admis que la puce auxiliaire multimédia doit piloter le module de commande de l'écran à affichage par cristaux liquides du terminal de radiocommunication GSM. Pour ce faire, de tels composants possèdent donc généralement une RAM interne correspondant à l'image de l'écran et leur permettant de mettre en oeuvre leur traitement d'image.

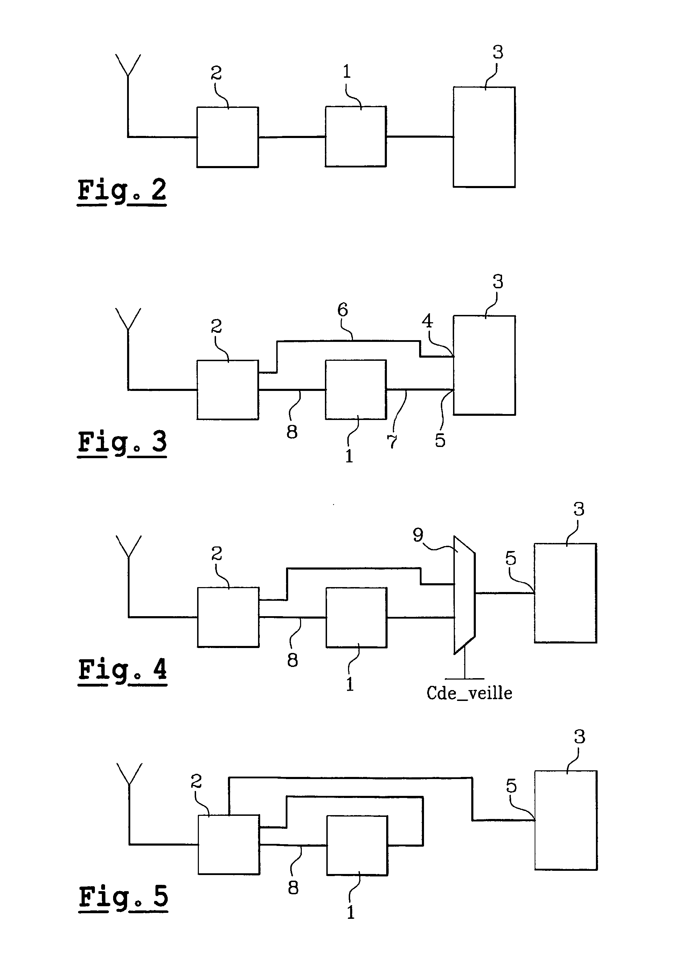

La figure 2 montre une telle architecture où une puce auxiliaire multimédia 1 est connectée à une puce GSM 2 par l'intermédiaire d'une liaison série, la puce GSM 2 étant prévue pour gérer les fonctionnalités classiques liées au protocole GSM. Une liaison bus parallèle est prévue pour assurer le transfert d'informations entre la puce auxiliaire multimédia 1 et un module de commande 3 qui gère l'écran à affichage par cristaux liquides du terminal de radiocommunication mobile.

On sait que l'économie d'énergie est un enjeu crucial pour les fabricants de terminaux de radiocommunication GSM et cet enjeu se traduit notamment par un souci d'optimiser au mieux l'autonomie en mode veille des terminaux de radiocommunication, le mode veille se caractérisant par une simple écoute du réseau, le terminal n'émettant rien. Cependant, quand le terminal de radiocommunication mobile est en mode veille, l'écran à affichage par cristaux liquides doit être rafraîchi régulièrement avec des informations concernant notamment l'état du réseau, l'état de la batterie, etc...

Or, on a vu que l'intégration d'une puce auxiliaire multimédia dans un terminal de radiocommunication GSM aboutit à l'architecture de la figure 2, où le module de commande de l'écran est piloté par la puce auxiliaire multimédia.

Selon la norme GSM, il est stipulé qu'une écoute du réseau doit être réalisée toutes les 2,5 secondes en moyenne. Ainsi, lorsque le terminal de radiocommunication est en mode veille, la puce GSM a potentiellement des informations à transmettre à la puce auxiliaire multimédia toutes les 2,5 secondes.

La puce auxiliaire multimédia doit alors sortir de l'état de veille pour mettre en oeuvre l'opération de rafraîchissement de l'écran à affichage par cristaux liquides. Dans tous les autres cas, des modes de mise hors tension de la puce auxiliaire sont mis en oeuvre. La puce auxiliaire désactive alors toutes ses ressources non nécessaires et reste en mode veille.

Néanmoins, comparé à une architecture d'un terminal de radiocommunication mobile classique où la puce GSM pilote directement l'écran à affichage par cristaux liquides par l'intermédiaire de son module de commande, l'architecture illustrée à la figure 2 d'un terminal de radiocommunication mobile « intelligent » où une puce auxiliaire multimédia est intégrée impose donc de mettre sous tension la puce auxiliaire multimédia même quand le terminal est en mode veille pour rafraîchir l'écran à affichage par cristaux liquides.

Ainsi, le fait de mettre sous tension la puce auxiliaire multimédia avec ses mémoires pour permettre l'affichage à l'écran d'informations qui concernent l'état du réseau alors que la puce auxiliaire est spécifiquement prévue pour traiter des informations de type multimédia a pour conséquence d'augmenter notablement la consommation d'énergie (notamment à cause des courants de fuite) pendant la durée du mode veille où des opérations de rafraîchissement de l'écran doivent être mises en oeuvre.

Une architecture de terminal de radiocommunication mobile telle qu'elle est représentée à la figure 2 où la puce auxiliaire multimédia pilote le module de commande de l'écran à affichage par cristaux liquides présente donc de faibles performances en terme de consommation d'énergie en mode veille du terminal.

Il est par ailleurs connu du document WO 93/25955 d'utiliser, à des fins d'économies d'énergie, deux microprocesseurs dans un terminal de radiocommunications, l'un étant destiné à piloter un module de commande d'un écran d'affichage, l'autre, de plus faible consommation, destiner à contrôler les fonctions, le processeur de contrôle étant notamment en charge de désactiver le microprocesseur pilotant le module d'affichage pendant des périodes de veille, et de le réactiver dès que l'écran doit être rafraîchi.

C'est par conséquent un objet de la présente invention de pallier aux inconvénients de l'art antérieur sus-mentionnés en proposant une amélioration à l'architecture décrite à la figure 2, de sorte à fournir un terminal de radiocommunication type GSM intelligent, c'est à dire intégrant une puce auxiliaire multimédia, doté de performances de consommation d'énergie en mode veille équivalentes à celles d'un terminal de radiocommunication mobile standard.

A cet effet, l'invention prévoit d'éviter d'utiliser la puce auxiliaire multimédia lorsque le terminal de radiocommunication est en mode veille. Ainsi, en mode veille où le terminal n'est pas en communication et met simplement en oeuvre une fonction d'écoute du réseau, l'invention prévoit de désactiver la puce auxiliaire multimédia et l'écran à affichage par cristaux liquides est alors rafraîchi directement par l'intermédiaire de la puce GSM.

L'invention concerne donc un terminal de radiocommunication tel que défini dans la revendication 1.

D'autres caractéristiques et avantages de la présente invention apparaîtront plus clairement à la lecture de la description qui suit donnée à titre d'exemple illustratif et non limitatif et faite en référence aux figures annexées dans lesquelles :
- la figure 1 est un schéma illustrant un terminal de radiocommunication standard et a déjà été décrite ;
- la figure 2 est un schéma illustrant les inconvénients liés à l'intégration d'une puce auxiliaire multimédia dans une architecture de terminal de radiocommunication standard et a déjà été décrite ;
- la figure 3 est un schéma illustrant un premier mode de réalisation de l'invention ;
- la figure 4 est un schéma illustrant un second mode de réalisation de l'invention, et
- la figure 5 est un schéma illustrant un troisième mode de réalisation de l'invention.

On retrouve aux figures 3, 4 et 5 les mêmes éléments que ceux déjà décrits en référence à la figure 2. Ainsi, la figure 3 montre un premier type de microprocesseur 1 réalisé sur une puce appelée puce auxiliaire multimédia. La puce auxiliaire 1 est dédiée spécifiquement au traitement des fonctionnalités multimédia du terminal dans lequel elle est intégrée, permettant ainsi d'améliorer fortement les fonctionnalités graphiques du terminal.

Un deuxième type de microprocesseur 2 est réalisé sur une autre puce appelée puce GSM. La puce GSM 2 est en effet prévue pour traiter les autres fonctionnalités du terminal de radiocommunication dans lequel elle est intégrée et en particulier les fonctionnalités liées à la gestion du protocole GSM.

La figure 3 montre enfin un module de commande 3 de l'écran à affichage par cristaux liquides disposant à la fois d'une interface série 4 et d'une interface parallèle 5. Dans ce premier mode de réalisation de l'invention, les deux types de microprocesseur 1 et 2 sont chacun connectés au module de commande 3 de l'écran à affichage par cristaux liquides. La puce GSM 2 ayant le moins d'informations à transmettre est connectée à l'interface série du module de commande 3 par l'intermédiaire d'une liaison bus série 6, tandis que la puce auxiliaire multimédia 1 est connectée à l'interface parallèle du module de commande 3 par l'intermédiaire d'une liaison bus parallèle 7, la puce GSM 2 et la puce auxiliaire multimédia 1 étant également connectées ensemble par l'intermédiaire d'une ligne de transmission de données 8. A un instant donné, on considère qu'il n'y a qu'un seul type de microprocesseur maître du module de commande de l'écran à affichage par cristaux liquides.

Dans cette configuration, notamment pour les applications de type multimédia, le module de commande de l'écran à affichage par cristaux liquides est piloté par la puce auxiliaire multimédia 1, la puce GSM étant quant à elle prévue pour gérer les autres fonctionnalités du terminal. Les informations concernant notamment l'affichage des barres de champ, l'état de la batterie etc... qui sont classiquement traitées par la puce GSM 2 sont alors transférées vers la puce auxiliaire 1 par l'intermédiaire de la ligne de transmission de données 8 de sorte à ce que la puce auxiliaire 1 commande l'affichage de ces informations à l'écran.

Cependant, lorsque le terminal passe en mode veille, c'est à dire qu'il est simplement en écoute du réseau, l'utilisateur ayant décidé d'arrêter les applications multimédia en cours, la puce GSM 2 devient seule maître du module de commande 3 de l'écran par l'intermédiaire le la liaison bus série 6. Ainsi, en mode veille, il n'y a que la puce GSM 2 qui travaille. Auquel cas, un transfert d'informations doit être réalisé avant de désactiver la puce auxiliaire multimédia 1, de la puce auxiliaire 1 vers la puce GSM 2 par l'intermédiaire de la ligne de transmission de données 8, de sorte que la puce GSM récupère le contexte dans lequel se trouvait l'écran du terminal avant qu'elle ne prenne la main et pilote à son tour le module de commande de l'écran.

La puce auxiliaire multimédia ainsi que ses mémoires, peut donc être désactivée en mode veille, autorisant ainsi de meilleures performances en terme d'économie d'énergie. Un mécanisme de désactivation est donc mis en oeuvre pour partager le module de commande de l'écran à affichage par cristaux liquides entre la puce GSM, lorsque le terminal est en mode veille, et la puce auxiliaire multimédia dans tous les autres cas, ce qui permet d'augmenter l'autonomie en veille du terminal ou du moins de la rendre équivalente à celle d'un terminal de radiocommunication standard ne mettant pas en oeuvre de puce auxiliaire multimédia.

Il est à noter que tous les modules de commande d'écran à affichage par cristaux liquides ne possèdent pas deux types d'interface, série et parallèle, comme en référence à la figure 1, mais pour la plupart seulement une interface parallèle. La figure 4 propose alors un mode de réalisation particulier de l'invention susceptible de s'adapter à de tels modules de commande d'écran.

Le module de commande 3 de l'écran à affichage par cristaux liquides de la figure 4 possède donc une seule interface parallèle 5, ce qui implique qu'un seul circuit peut lui être connecté.

L'architecture de la figure 4 comprend alors en plus un multiplexeur externe 2x1 9 dont les deux entrées sont connectées respectivement, l'une au premier type de microprocesseur réalisée sur la puce auxiliaire multimédia 1, l'autre au deuxième type de microprocesseur réalisé sur la puce GSM 2, par l'intermédiaire de liaisons de type bus parallèle. La sortie du multiplexeur 9 est quant à elle connectée à l'interface parallèle du module de commande 3 de l'écran à affichage par cristaux liquides par l'intermédiaire d'une liaison de type bus parallèle. Enfin, la puce GSM 2 et la puce auxiliaire 1 sont reliées entre elles par la ligne de transmission de données 8.

Le rôle du multiplexeur 9 est de gérer une priorité d'accès au module de commande 3 de l'écran entre la puce auxiliaire multimédia 1 et la puce GSM 2. Le multiplexeur 9 permet de prendre en compte soit le flux de données qui vient de la puce GSM lorsque le terminal est en mode veille, soit le flux de données qui vient de la puce auxiliaire multimédia dans les autres cas.

Pour ce faire, le multiplexeur externe 9 est commandée par une commande cde-veille, laquelle peut par exemple être pilotée par la puce GSM. Ainsi, lorsque le terminal se trouve en mode veille et que l'utilisateur décide d'arrêter les applications multimédia en cours, la commande cde-veille est appliquée au multiplexeur 9 par l'intermédiaire de la puce GSM et le flux de données pris en compte pour piloter le module de commande de l'écran est celui issu de la puce GSM 2. La puce GSM 2 pilote alors le module de commande 3 de l'écran tandis que la puce auxiliaire multimédia 1 est désactivée, ce qui permet d'optimiser la consommation d'énergie du terminal en mode veille. Préalablement à sa désactivation, la puce auxiliaire 1 transfère des informations à la puce GSM 2 par l'intermédiaire de la ligne 8 de sorte que la puce GSM 2 récupère le contexte dans lequel se trouvait l'écran avant qu'elle ne prenne la main pour piloter à son tour l'écran.

Inversement, lorsque le terminal n'est plus en mode veille ou que l'utilisateur lance des applications multimédia, la commande cde-veille n'est pas appliquée au multiplexeur 9 et le flux de données pris en compte par le multiplexeur sera celui issu de la puce auxiliaire multimédia 1 qui va alors piloter le module de commande 3 de l'écran. Quand la puce auxiliaire 1 est activée, des données sont transmises sur la ligne 8 de la puce GSM 2 vers la puce auxiliaire 1 qui pilote dorénavant l'écran de façon à tenir compte des informations classiquement traitées par la puce GSM concernant les barres de champs, l'état de la batterie etc...

Enfin, le mode de réalisation de la figure 5 illustre une variante du mode de réalisation qui vient d'être décrit en référence à la figure 4. Dans cette variante, une évolution de la puce GSM classique est mise en oeuvre dans un souci d'utiliser le minimum de composant. Ainsi, le multiplexeur 9 de la figure 4 est avantageusement intégré à la puce GSM 2, laquelle doit alors comprendre des entrées/sorties supplémentaires. Néanmoins, les connexions entre les différents composants restent identiques par rapport à la figure 4. L'intégration du multiplexeur 9 à la puce GSM 2 ne modifie donc en rien le fonctionnement tel qu'il a été décrit en référence à la figure 4 mais permet par contre d'optimiser davantage l'architecture de la figure 4 en terme de coût et de place, en plus de permettre une optimisation de l'autonomie du terminal en mode veille.

## Revendications

1. Terminal de radiocommunication (10) comprenant un écran (12) géré par un module de commande (3) et au moins deux types différents de microprocesseur (1,2), un premier type de microprocesseur (1) améliorant les fonctionnalités graphiques dudit terminal (10) et un second type de microprocesseur (2) gérant les autres fonctionnalités dudit terminal (10) dont celles liées au protocole de radiocommunication, les deux microprocesseurs étant reliés l'un à l'autre par une liaison de transmission de données (8) et le premier type de microprocesseur (1) étant relié au module de commande (3) de sorte qu'en dehors d'un mode de veille du terminal de radiocommunication, ledit module de commande (3) est piloté uniquement par le premier type de microprocesseur en utilisant les informations concernant l'affichage traitées soit par le premier soit par le second type de microprocesseur, **caractérisé en ce que**, avant d'entrer dans le mode de veille, des informations relatives au contexte dans lequel se trouve l'écran d'affichage sont transférées du premier type de microprocesseur (1) vers le deuxième type de microprocesseur, et pendant le mode de veille, ledit second type de microprocesseur (2) pilote directement ledit module de commande (3) de l'écran (12) en utilisant les informations transférées, ledit premier type de microprocesseur (1) étant désactivé.

2. Terminal de radiocommunication (10) selon la revendication 1, **caractérisé en ce que** le module de commande (3) de l'écran (12) comprend une interface parallèle (5) et une interface série (4), ladite interface parallèle étant connectée au premier type de microprocesseur (1) par l'intermédiaire d'une liaison bus parallèle (7), ladite interface série (4) étant connectée au deuxième type de microprocesseur (2) par l'intermédiaire d'une liaison bus série (6).

3. Terminal de radiocommunication (10) selon la revendication 1, **caractérisé en ce que** le module de commande (3) de l'écran (12) comprend une unique interface parallèle (5), ledit terminal (10) comprenant en plus un multiplexeur externe (9) dont une sortie est connectée par une liaison bus parallèle à ladite interface parallèle (5) dudit module de commande (3) de l'écran (12) et dont une première et une deuxième entrée sont connectées respectivement au premier (1) et au deuxième (2) type de microprocesseur par l'intermédiaire de liaisons bus parallèle.

4. Terminal de radiocommunication (10) selon la revendication 3, **caractérisé en ce que** le multiplexeur (9) est intégré à la puce sur laquelle est réalisé le deuxième type de microprocesseur.

5. Terminal de radiocommunication (10) selon la revendication 3 ou 4, **caractérisé en ce que** le multiplexeur (9) est commandée par l'application d'une commande (cde-veille) pilotée par le deuxième type de microprocesseur (2) de façon à permettre audit multiplexeur (9) de gérer une priorité d'accès au module de commande (3) de l'écran entre lesdits premier (1) et deuxième (2) microprocesseurs suivant que ledit terminal (10) est en mode veille ou non.

6. Terminal de radiocommunication (10) selon l'une des revendications précédentes, **caractérisé en ce que** le premier type de microprocesseur (1) est dédié au traitement des fonctionnalités multimédia dudit terminal (10).

7. Terminal de radiocommunication (10) selon l'une des revendications précédentes, **caractérisé en ce que** le deuxième type de microprocesseur (2) est dédié au traitement des fonctionnalités liées au protocole GSM.

## Claims

1. Radiocommunications terminal (10) comprising a screen (12) managed by a control module (3) and at least two different types of microprocessor (1,2), a first type of microprocessor (1) improving the graphics functionalities of said terminal (10) and a second type of microprocessor (2) managing the other functionalities of said terminal (10) of which those linked to the radiocommunications protocol, the two microprocessors being connected together by a data transmission link (8) and the first type of microprocessor (1) being connected to the control module (3) in such a way that outside of a standby mode of the radiocommunications terminal, said control module (3) is driven solely by the first type of microprocessor by using the information relating to the display processed either by the first or by the second type of microprocessor, **characterised in that**, before entering into the standby mode, information concerning the context concerning the current state of the display screen is transferred from the first type of microprocessor (1) to the second type of microprocessor, and during the standby mode, said second type of microprocessor (2) directly drives said control module (3) of the screen (12) by using the information transferred, said first type of microprocessor (1) being deactivated.

2. Radiocommunications terminal (10) set forth in claim 1, **characterised in that** the control module (3) of the screen (12) comprises a parallel interface (5) and a serial interface (4), said parallel interface being connected to the first type of microprocessor (1) by the intermediary of a parallel bus link (7), said serial interface (4) being connected to the second type of microprocessor (2) by the intermediary of a serial bus link (6).

3. Radiocommunications terminal (10) set forth in claim 1, **characterised in that** the control module (3) of the screen (12) comprises a unique parallel interface (5), said terminal (10) further comprising an external multiplexer (9) of which one output is connected by a parallel bus link to said parallel interface (5) of said control module (3) of the screen (12) and of which a first and a second input are connected respectively to the first (1) and to the second (2) type of microprocessor by the intermediary of parallel bus links.

4. Radiocommunications terminal (10) set forth in claim 3, **characterised in that** the multiplexer (9) is integrated into the chip whereon is carried out the second type of microprocessor.

5. Radiocommunications terminal (10) set forth in claim 3 or 4, **characterised in that** the multiplexer (9) is controlled by the application of a command driven by the second type of microprocessor (2) in such a way as to allow said multiplexer (9) to manage a priority of access to the control module (3) of the screen between said first (1) and second (2) microprocessors according to whether or not said terminal (10) is in standby mode.

6. Radiocommunications terminal (10) according to one of the preceding claims, **characterised in that** the first type of microprocessor (1) is dedicated to the processing of multimedia functionalities of said terminal (10).

7. Radiocommunications terminal (10) according to one of the preceding claims, **characterised in that** the second type of microprocessor (2) is dedicated to the processing of the functionalities linked to the GSM protocol.

## Patentansprüche

1. Funk-Endgerät (10), aufweisend einen Bildschirm (12), der von einem Steuermodul (3) gesteuert wird, und zumindest zwei verschiedene Typen von Mikroprozessoren (1, 2), wobei ein erster Typ eines Mikroprozessors (1) die grafischen Funktionen des Endgeräts (10) verbessert und ein zweiter Typ eines Mikroprozessors (2) die anderen Funktionen des Endgeräts (10) steuert, von denen welche mit dem Funk-Protokoll verknüpft sind, wobei die zwei Mikroprozessoren durch eine Datenübertragungsverbindung (8) miteinander verbunden sind und der erste Typ eines Mikroprozessors (1) mit dem Steuermodul (3) derart verbunden ist, dass außerhalb eines Standby-Modus des Funk-Endgeräts das Steuermodul (3) allein durch den ersten Typ eines Mikroprozessors betrieben wird, indem die Informationen, die sich auf das Display beziehen, entweder verarbeitet durch den ersten oder durch den zweiten Typ von Mikroprozessor verwendet werden,
**dadurch gekennzeichnet, dass**,
bevor in den Standby-Modus eingetreten wird, Informationen betreffend den Zusammenhang in Bezug auf den momentanen Status des Displaybildschirms von dem ersten Typ von Mikroprozessor (1) zu dem zweiten Typ von Mikroprozessor (2) übertragen werden und während dem Standby-Modus der zweite Typ von Mikroprozessor (2) unmittelbar das Steuermodul (3) des Bildschirms (12) betreibt, indem die übertragenen Informationen verwendet werden, wobei der erste Typ von Mikroprozessor (1) deaktiviert ist.

2. Funk-Endgerät (10) nach Anspruch 1, **dadurch gekennzeichnet, dass** das Steuermodul (3) des Bildschirms (12) eine parallele Schnittstelle (5) und eine serielle Schnittstelle (4) aufweist, wobei die parallele Schnittstelle mit dem ersten Typ von Mikroprozessor (1) durch Zwischenschaltung einer Parallelbus-Verbindung (7) verbunden ist, wobei die serielle Schnittstelle (4) mit dem zweiten Typ von Mikroprozessor (2) durch die Zwischenschaltung einer seriellen Bus-Verbindung (6) verbunden ist.

3. Funk-Endgerät (10) nach Anspruch 1, **dadurch gekennzeichnet, dass** das Steuermodul (3) des Bildschirms (12) eine einzigartige parallele Schnittstelle (5) aufweist, wobei das Endgerät (10) außerdem einen externen Multiplexer (9) aufweist, wobei ein Ausgang davon durch eine parallele Bus-Verbindung mit der parallelen Schnittstelle (5) des Steuermoduls (3) des Bildschirms (12) verbunden ist und wobei ein erster und ein zweiter Eingang davon jeweils mit dem ersten (1) und dem zweiten (2) Typ von Mikroprozessor durch die Zwischenschaltung von parallelen Bus-Verbindungen verbunden ist.

4. Funk-Endgerät (10) nach Anspruch 3, **dadurch gekennzeichnet, dass** der Multiplexer (9) in den Chip integriert ist, auf dem der zweite Typ von Mikroprozessor ausgeführt ist.

5. Funk-Endgerät (10) nach Anspruch 3 oder 4, **dadurch gekennzeichnet, dass** der Multiplexer (9) durch die Anwendung eines Befehls gesteuert ist, der von dem zweiten Typ des Mikroprozessor (2) derart betrieben wird, dass es dem Multiplexer (9) erlaubt ist, eine Priorität eines Zugangs zu dem Steuermodul (3) des Bildschirms zwischen dem ersten (1) und dem zweiten (2) Mikroprozessor zu steuern, entsprechend ob das Endgerät (10) im Standby-Modus ist oder nicht.

6. Funk-Endgerät (10) nach einem der vorhergehenden Ansprüche, **dadurch gekennzeichnet, dass** der erste Typ von Mikroprozessor (1) der Verarbeitung von Multimedia-Funktionen des Endgeräts (10) gewidmet ist.

7. Funk-Endgerät (10) nach einem der vorhergehenden Ansprüche, **dadurch gekennzeichnet, dass** der zweite Typ von Mikroprozessor (2) der Verarbeitung von Funktionen in Verbindung mit dem GSM-Protokoll gewidmet ist.
